Europäisches Patentamt

European Patent Office

Office européen des brevets

(11) Veröffentlichungsnummer: **0 413 207 A2**

## (12) EUROPÄISCHE PATENTANMELDUNG

(21) Anmeldenummer: 90114812.2

(22) Anmeldetag: 02.08.90

(51) Int. Cl.5: **B60C 15/04**, B60C 15/02

(30) Priorität: 17.08.89 DE 3927127

(43) Veröffentlichungstag der Anmeldung:
20.02.91 Patentblatt 91/08

(84) Benannte Vertragsstaaten:
AT BE CH DE DK ES FR GB GR IT LI LU NL SE

(71) Anmelder: **Continental AG**
**Königsworther Platz 1 Postfach 1 69**
**D-3000 Hannover 1(DE)**

(72) Erfinder: **Brettschneider, Wolfgang, Dipl.-Ing.**
**Schwalbenweg 1**
**D-3016 Seelze(DE)**

(54) **Fahrzeugluftreifen mit krempelbaren Wülsten und darin eingebetteten Wulstkernen.**

(57) Die Erfindung bezieht sich auf Fahrzeugluftreifen (1) mit krempelbaren Wülsten (2) und darin eingebetteten Wulstkernen (3), wobei die Wulstkerne (3) kabelartig aus im wesentlichen in Umfangsrichtung verlaufenden Festigkeitsträgern (4) aufgebaut sind, wobei die Festigkeitsträger (4) im Querschnitt so angeordnet sind, daß ein jeder - unter Vernachlässigung einer eventuell unvermeidlichen hauchdünnen Zwischenschicht - mindestens zwei andere Festigkeitsträger berührt.

Um die Radialkraft-Schwankungen und deren Reproduzierbarkeit weiter zu verbessern, wird vorgeschlagen, daß die Festigkeitsträger (4) zumindest insoweit sie mit Kautschuk benetzt sind eine Oberfläche aufweisen, die eine Haftung an vulkanisiertem Gummi verhindert und, daß die Festigkeitsträger (4) der äußeren Kernlage so angeordnet sind, daß sie sich untereinander nicht berühren.

FIG.1

## FAHRZEUGLUFTREIFEN MIT KREMPELBAREN WÜLSTEN UND DARIN EINGEBETTETEN WULSTKERNEN

Die Erfindung bezieht sich auf einen Fahrzeugluftreifen mit krempelbaren Wülsten und darin eingebetteten Wulstkernen, wobei die Wulstkerne kabelartig aus im wesentlichen in Umfangsrichtung verlaufenden Festigkeitsträgern aufgebaut sind, wobei die Festigkeitsträger im Querschnitt so angeordnet sind, daß ein jeder - unter Vernachlässigung einer eventuell unvermeidlichen hauchdünnen Zwischenschicht - mindestens zwei andere Festigkeitsträger berührt. Solche Reifen sind bekannt.

In der älteren, noch nicht veröffentlichten Deutschen Patentanmeldung P 38 20 135.6 sind darüber hinaus solche Reifen beschrieben, deren Wulstkerne aus Festigkeitsträgern aufgebaut sind, die eine Oberfläche ausweisen, die eine Haftung an vulkanisiertem Gummi verhindert. Obwohl diese Reifen, die die Krempelbarkeit der Wülste benötigen, um auf einer Felge montiert zu sein, deren Felgenhörner nach radial innen weisen, schon Verbesserungen im Rundlauf zeigten, sind weitere Verbesserungen des Rundlaufes und dessen Reproduzierbarkeit wünschenswert.

Aufgabe der Erfindung ist es, den Mittelwert der Rundlauffehler und die Bandbreite der zufällig auftretenden Schwankungen der Rundlaufgenauigkeit zu verringern. Dabei wird der Rundlauf im wesentlichen anhand der Radialkraftschwankungen bewertet. Unter guter Reproduzierbarkeit der Rundlaufwerte ist die Kleinheit der Schwankungen der Rundlaufwerte nach wiederholten Montagen zu verstehen.

Die Aufgabe wird erfindungsgemäß dadurch gelöst, daß die Festigkeitsträger, zumindest insoweit sie mit Kautschuk benetzt sind, eine Oberfläche aufweisen, die eine Haftung an vulkanisiertem Gummi verhindert und, daß die Festigkeitsträger der äußeren Kernlage so angeordnet sind, daß sie sich untereinander nicht berühren. Während bislang die Wulstkernkonstruktionen so aufgebaut waren, daß die Festigkeitsträger der äußeren Kernlage nicht nur die Festigkeitsträger der nächstinneren Kernlage, sondern auch die benachbarten anderen Festigkeitsträger der äußeren (gleichen) Kernlage berührt haben, wobei allenfalls eine konstruktiv unbedeutende aus fertigungstechnischen Gründen nicht immer zu vermeidende hauchdünne, wenige hundertstel millimeter starke Zwischenschicht aus Gummi sich stellenweise ergeben hat, soll nach der Erfindung zwischen den Festigkeitsträgern der äußeren Kernlage ein Abstand von mindestens 1/2 mm vorhanden sein, bezogen auf jede beliebige Stelle benachbarter Festigkeitsträger der gleichen Kernlage.

Der Erfindung liegt die neue Theorie zugrunde, daß für die Wiederholungs-Korrelation der Rundlaufgenauigkeit weniger die Position des Wulstes in radialer und axialer Richtung gegenüber der Felge als vielmehr die Winkelstellung des Wulstes im Reifenquerschnitt von Bedeutung ist. Erste Messungen haben eine deutliche Korrelation gezeigt zwischen der Winkelstellung des Wulstes und den Rundlaufwerten. Als Winkelstellung des Wulstes wird der Winkel bezeichnet, den die Tangente an die radial innere Seite des Wulstes mit der Reifendrehachse bzw. einer Parallele dazu einschließt. Auf diese neue Theorie gründend lebt die Erfindung von der Idee, daß der Wulstkern aufgrund dessen, daß er aus wesentlich steiferen Materialien, vorzugsweise Stahldraht, aufgebaut ist als der umgebende Wulst in seiner Winkelstellung in wesentlich höherem Maße reproduzierbar ist als der umgebende Wulst, insbesondere dessen Gummi und Karkaß-Lagenumschlag. Hierauf aufbauend ist der wesentliche Lösungsgedanke der Erfindung eine drehfeste, formschlüssige, kerbverzahnungs-ähnliche Anbindung des Wulstgummis an den Wulstkern zu bewirken. Der erfindungsgemäße große Abstand der Festigkeitsträger der äußeren Kernlage zueinander bewirkt, daß dieser Zwischenraum mit der steifen Wulstgummiqualität erfüllt wird und daß nach Abschluß der Vulkanisation der Wulstgummi eine drehfeste Innenverzahnung aufweist, zu der die untereinander auf Abstand liegenden Festigkeitsträger der äußeren Kernlage die passende Außenverzahnung abgeben.

Es empfiehlt sich, daß der kürzeste Abstand zwischen zwei benachbarten Festigkeitsträgern der äußeren Lage mindestens 20 % und höchstens 65 % des betreffenden Drahtdurchmessers beträgt. Wenn der Abstand zu klein ist, dann sind die nach innen weisenden Gummizähne des Wulstgummis nicht hinreichend widerstandsfähig, wenn der kürzeste Abstand dagegen mehr als 65 % des betreffenden Drahtdurchmessers beträgt, dann gibt es zwar sehr steife aber unnötig wenige Zähne, sodaß die Gefahr besteht, daß die Festigkeitsträger der äußeren Wulstkernlage auf eine Torsionsbeanspruchung hin nachgeben, der Wulstkernaufbau also unregelmäßig wird. Vorzugsweise beträgt der kleinste Abstand zwischen zwei benachbarten Festigkeitsträgern der äußersten Wulstkernlage zwischen 45 % und 60 % des Drahtdurchmessers.

Unter dem Begriff "Lage" werden im Rahmen dieser Anmeldung solche Festigkeitsträger zusammengefaßt, die den gleichen Durchmesser haben und die im Reifenquerschnitt zur Wulstkernmitte den gleichen Abstand aufweisen. Von zwei Wulstkernlagen ist diejenige weiter außen, deren Festigkeitsträgermittelpunkte im Reifejquerschnitt einen größeren Abstand vom Wulstkernmittelpunkt aufweisen.

Eine besonders tragfähige Innenverzahnung ergibt sich im Wulstgummi, wenn der Festigkeitsträgerdurchmesser der äußeren Lage der Wulstkerne größer ist als der Festigkeitsträgerdurchmesser der nächstinneren Lage.

Die Erfindung wird nachfolgend anhand dreier Figuren näher erläutert:

Es zeigt:

Fig. 1 einen erfindungsgemäßen Fahrzeugluftreifen,

Fig. 2 einen zweilagigen Wulstkern, dessen beide Lagen den Seelendraht berühren,

Fig. 3 einen weiteren erfindungsgemäßen zweilagigen Wulstkern wo nur die innere Lage einen Seelendraht berührt.

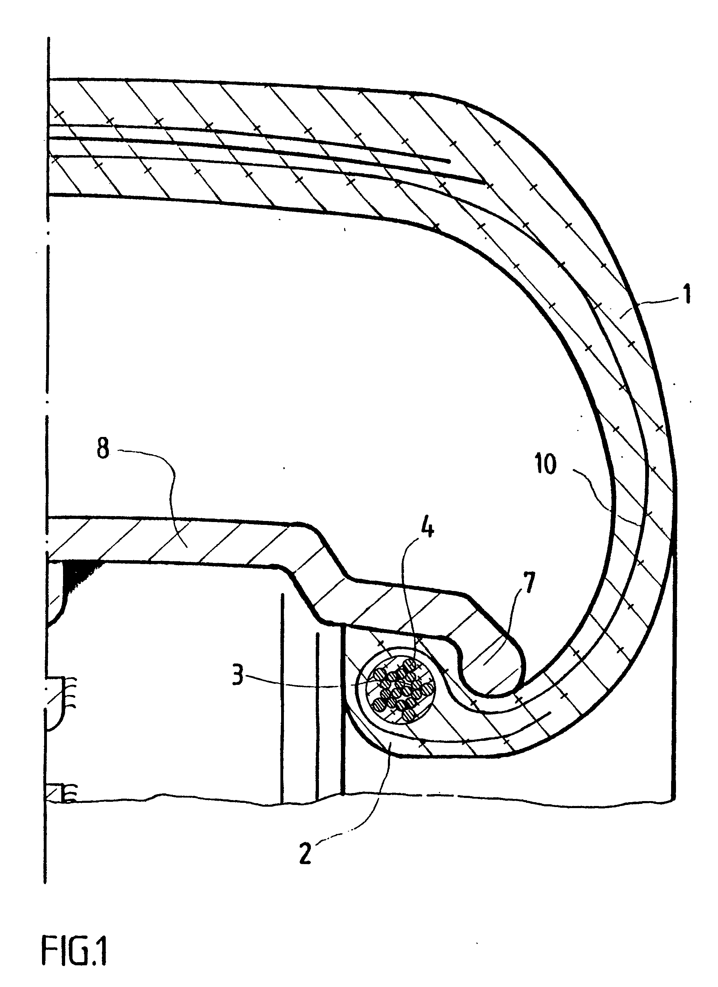

Die Figur 1 zeigt einen erfindungsgemäßen Fahrzeugluftreifen 1, der mit seinen Wülsten 2 die Felgenhörner 7 der Felge 8 umgreift. Dabei liegen die Wülste 2 auf der radial inneren Seite der Felge 8. In den Wülsten 2 sind Wulstkerne 3 angeordnet, die aus Festigkeitsträgern 4 bestehen. Die Festigkeitsträger 4 bestehen in allen drei Ausführungsbeispielen aus Stahldraht. Um die Wulstkerne 3 ist eine Radialkarkasse 10 herumgeschlagen.

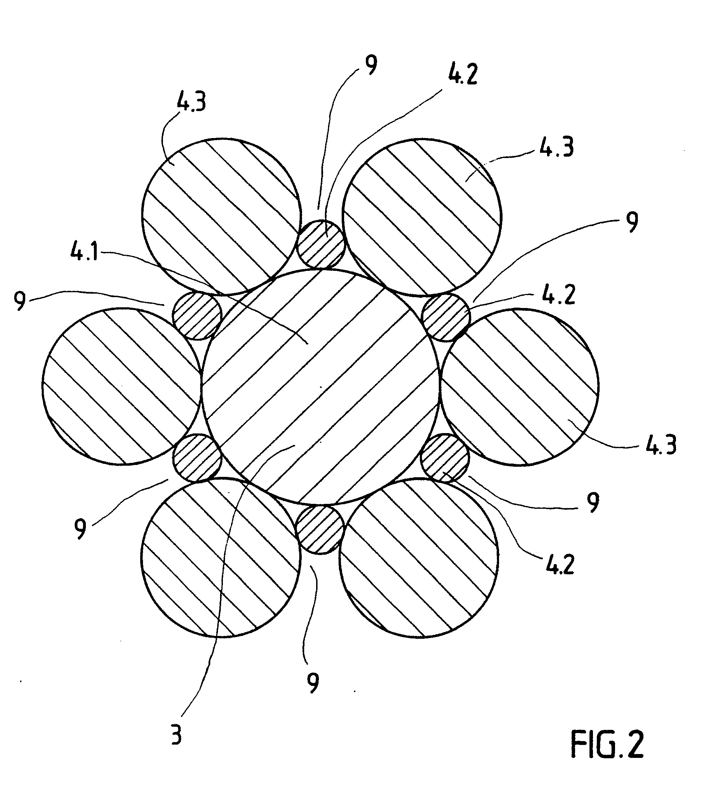

Die Figur 2 zeigt einen Wulstkern im detaillierten Querschnitt. Dieser Wulstkern 3 besteht aus einem Seelendraht 4.1, sechs Drähten 4.2 der inneren Lage von kleinem Durchmesser und sechs Drähten 4.3 der äußeren Lage. Die Drähte 4.2 der inneren Kernlage sind wesentlich dünner als die Drähte 4.3 der äußeren Lage, wodurch sich zwischen den Drähten 4.3 der äußeren Lage große Abstände ergeben. Sowohl die Drähte 4.3 der äußeren Lage als auch die Drähte 4.2 der inneren Lage berühren den Seelendraht 4.1. Die sich ergebenden Zwischenräume, in die der Wulstgummi kerbverzahnungsähnlich eingreifen soll, sind mit dem Bezugszeichen 9 kenntlich gemacht.

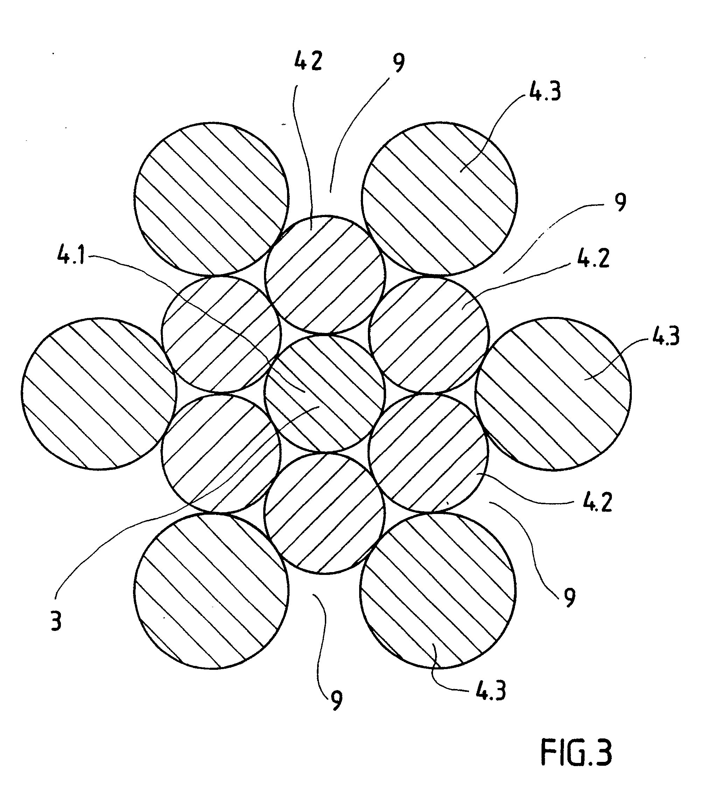

Die Figur 3 zeigt einen ebenfalls aus 13 Einzeldrähten aufgebauten Wulstkern-Querschnitt mit einem Seelendraht 4.1 und Drähten 4.2 einer inneren Lage; die Drähte 4.3 der äußeren Lage berühren abweichend von Figur 1 ausschließlich je zwei Drähte 4.2 der inneren Lage, berühren also nicht den Seelendraht 4.1. Der Wulstkernquerschnitt nach Figur 3 ist besonders flexibel, da der Seelendraht 4.1 nicht dicker ist als die Drähte 4.2 der inneren Lage. Zwischen den Drähten 4.3 der äußeren Lage ergeben sich so große Freiräume 9 in der Umfangsrichtung des Wulstkern-Querschnittes, daß in diese Zwischenräume einfließender Kautschuk nach der Vulkanisation eine tragfähige Verzahnung ergibt. Dieser Effekt ist noch dadurch gestärkt, daß die Kerndrähte 4.3 der äußeren Lage dicker als alle übrigen Kerndrähte 4 sind.

Das Wesentliche der Erfindung ist die Lehre, daß an Reifen mit krempelbaren Wülsten die Rundlaufgenauigkeit dadurch gesteigert werden kann, daß die Festigkeitsträger der äußeren Kernlage so angeordnet sind, daß sie zueinander mindestens einen Abstand von 0,5 mm aufweisen.

## Ansprüche

1. Fahrzeugluftreifen (1) mit krempelbaren Wülsten (2) und darin eingebetteten Wulstkernen (3), wobei die Wulstkerne (3) kabelartig aus im wesentlichen in Umfangsrichtung verlaufenden Festigkeitsträgern (4) aufgebaut sind, wobei die Festigkeitsträger (4) im Querschnitt so angeordnet sind, daß ein jeder - unter Vernachlässigung einer eventuell unvermeidlichen hauchdünnen Zwischenschicht - mindestens zwei andere Festigkeitsträger berührt, **dadurch gekennzeichnet,** daß die Festigkeitsträger (4) zumindest insoweit sie mit Kautschuk benetzt sind eine Oberfläche aufweisen, die eine Haftung an vulkanisiertem Gummi verhindert und, daß die Festigkeitsträger (4) der äußeren Kernlage (6) so angeordnet sind, daß sie sich untereinander nicht berühren.

2. Fahrzeugluftreifen nach Anspruch 1, dadurch gekennzeichnet, daß der kürzeste Abstand zwischen zwei benachbarten Festigkeitsträgern der äußeren Lage mindestens 20 % und höchstens 65 % des betreffenden Drahtdurchmessers beträgt.

3. Fahrzeugluftreifen nach Anspruch 2, dadurch gekennzeichnet, daß der kleinste Abstand zwischen zwei benachbarten Festigkeitsträgern der äußersten Lage zwischen 45 % und 60 % des Drahtdurchmessers beträgt.

4. Fahrzeugluftreifen nach Anspruch 1, dadurch gekennzeichnet, daß der Festigkeitsträgerdurchmesser der äußeren Lage der Wulstkerne (3) größer ist als der Festigkeitsträgerdurchmesser (d) der nächstinneren Lage.

FIG.1

4

FIG.2

FIG.3